# EUROPEAN PATENT SPECIFICATION

(11) **EP 3 714 142 B1**
(45) Date of publication and mention of the grant of the patent: **29.12.2021**
(21) Application number: 18910466.4
(22) Date of filing: 15.11.2018
(51) Int. Cl.: F01P 7/16, G05D 23/13

(54) **EXTENDING OF OPERATING TEMPERATURE RANGE OF WAX BASED THERMOSTAT**
ERWEITERUNG DES BETRIEBSTEMPERATURBEREICHS EINES THERMOSTATS AUF WACHSBASIS
EXTENSION DE LA PLAGE DE TEMPÉRATURES DE FONCTIONNEMENT D'UN THERMOSTAT À BASE DE CIRE

(30) Priority: 24.11.2017 TR 201718755
(43) Date of publication of application: 30.09.2020
(73) Proprietor: Kirpart Otomotiv Parçalari Sanayi Ve Ticaret Anonim Sirketi, 16800 Bursa (TR)
(72) Inventor: KANBUR, Hikmet, 16800 Orhangazi/Bursa (TR); UNLUASLAN, Faruk, Nilüfer/Bursa (TR)
(74) Representative: Demirkiran, Hasan
(86) International application number: PCT/TR2018/050691
(87) International publication number: WO 2019/182533

(56) References cited:
- EP-A2- 1 024 257
- DE-C1- 19 637 818
- GB-A- 2 335 966
- US-A- 2 396 138
- US-A- 4 964 371
- US-A1- 2010 095 908
- US-B1- 6 343 573

## Description

### Technical Field

The invention relates to a three-way thermostat assembly used in engine cooling system, more particularly, an improvement in temperature control range of the cooling system.

Specifically, the present invention relates to an improved operating temperature range of thermostat assembly comprising a secondary wax based thermo-actuator which works together with the primary wax based thermo-actuator. Here, said improvement in operating temperature range of the cooling system is obtained by using thermo-actuators which has different temperatures for starting to open and fully opened temperature.

### Prior Art

Combustion engines are designed to work efficiently in the desired temperature range. But they generally have to run in the different temperature ranges than the desired values for them due to insufficient cooling of engine and engine parts. Engines working under the higher or lower temperature ranges than the desired temperature range cause the vehicle performance to decrease.

There are different engine cooling systems for combustion engine. The aim of all engine cooling system is to keep the engine in proper temperature range. The most common solution used to keep engine in the desired temperature range is using a wax type thermostat in the engine cooling system. Although the wax type thermostats have self-actuated structure according to the temperature of the recirculated engine coolant, they are not sufficient to keep engine in the desired temperature range because of that the thermo-actuator within the thermostat assembly is actuated for restricted temperature ranges according to its actuation temperature. At temperature values out of these actuation temperatures, the thermostat assembly is not sensitive enough.

There are also some engine cooling systems with thermostat assembly comprising map-controlled wax based thermo-actuator to keep the engine in the desired temperature range. Here, different means and methods are used to keep engine in the proper temperature range against the variable temperature values of the engine coolant. The need of cooling is detected according to measured engine temperature or the estimated engine temperature during the changing engine conditions of a vehicle cruising. Engine designers could estimate the need of engine cooling during a trip.

Thereby they design the map-controlled engine cooling systems by using these estimations. The logic of the map-controlled engine cooling system is to direct the valve structure of the thermo-actuator within the thermostat assembly via a remotely controlled heater according to the changing engine conditions during a trip.

There are different means which are used in the map-controlled engine cooling system of the combustion engine. One of the means is the electrical wire resistance heater. The electrical wire resistance inserted into a part of the piston contact with the wax compound is used to quickly heat wax compound at the engine condition when there is a need emergency in engine cooling. So, the wax compound is heated until the pressure value of the wax compound reaches the pressure values enough to push the guided piston forward. The level of additional heating provided via the electrical wire resistance heater is determined according to the changing engine conditions during a trip. So, the valve position determining the coolant flow ratio between the bypass circuit (engine channels) and the heat exchange circuit (both engine channels and the radiator channels) is defined according to the variable engine conditions during a trip.

Also, there is another remotely controlled heater using PCT (positive temperature coefficient) heater as means. The map-controlled engine cooling system using PCT heater is better than the engine cooling system using electrical wire resistance as heater. Since the wire resistance heaters are energized by a relay, in the case of a relay fails, the non-interrupted heating through the wire causes harms on wax compound and sealing components. Also, the heating wire could get broken in cases such as overheating due to fatigue of metal. There is not possible overheating of resistance in the map-controlled engine cooling systems using PTC heater. PTC product has a changeable electrical resistance. The electrical resistance is dramatically increased with increasing temperature. Thereby it loses its heating features at specific high temperatures even if it continues to be energized.

Although the map-controlled engine cooling systems using PCT heater is better in some way than the one using electrical wire resistance heater, both map-controlled engine cooling system should be energized by cables from outside of the system. All the methods about additional heating of the wax compound need a heating element. This energy is supplied to the heating element via energy cables. So, map controlled methods used to keep engine in the desired temperature range need more complex systems and consequently their costs are much more than the conventional thermostat applications.

The document US20130152880 mentions a thermostat housing with least two thermos-actuators within the housing and a thermostat assembly thereof. The adjoining thermo-actuators reduces flow rate effectively by staggering opening temperature of these multiple thermostats. Thus, the mentioned thermostat assembly has the ability to reduce abrupt transitions in radiator coolant flow and temperature and pressure cycling fluctuations seen in single thermostat system. Besides, the thermostat embodiment reduces the pressure drop across the thermostat and lowers cooling system (water pump) parasitic since the operating conditions requiring low radiator coolant flow rates results in an increased stroke as compared to a single thermostat design, resulting in less shear and disruption to the coolant flow stream. Although the thermostat assembly described here comprises also two thermo-actuators and has two distinct benefits, it does not relate to an improved valve control by taking advantages of the total stroke coming from different temperature-actuated thermo-actuators. Besides, these least two thermo-actuators within the mentioned thermostat assembly control least two different valves. This means that this thermostat assembly is useless for the thermostat geometries in which it is not possible to locate two different valve structures. GB 2 335 966 discloses an arrangement according to the preamble of claim 1.

As a result, there is any invention increasing the stroke capacity over wide temperature range within geometry restrictions by improving operating temperature range of the thermostat assembly without any external source or remotely control. So, the solution of the present invention is required.

### Objectives and Short Description of the Invention

The aim of the present invention is to present a three-way thermostat assembly which, comprising two thermo-actuators whose actuation temperature values are different from each other, provides a wide range temperature control over the engine cooling system by controlling the axial motion of the valve structure according to the sum of the strokes coming from both these thermo-actuators. Another aim of the present invention is to enlarge the temperature control range where the thermostat assembly is sensitive without any external source or remotely control.

Another aim of the present invention is to provide improvement in the operating temperature range of the cooling system even for restricted geometries by controlling one valve structure via two different temperature-actuated thermo-actuators.

### Description of the Figures

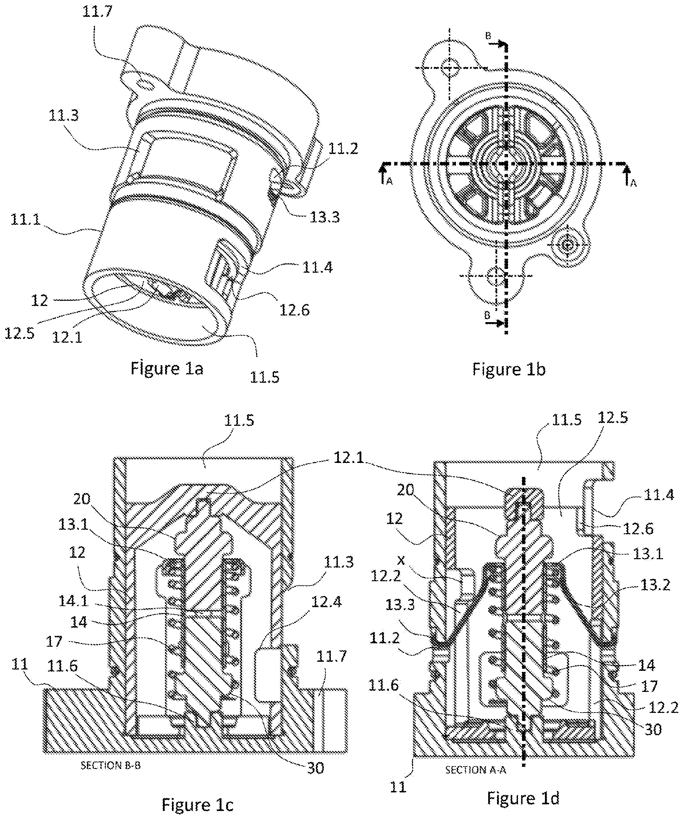

In figure 1, a fully closed position of the present thermostat assembly is shown. At this thermostat position, primary and secondary thermo-actuators are both close. This causes the radiator inlet to be close and the bypass inlet to be open. Since the radiator inlet is close, there is just a bypass circuit coolant flow from bypass coolant inlet to outlet. A perspective view of the present thermostat assembly in fully closed position is given in figure 1a. A top sectional view of the present thermostat assembly in fully closed position is given in figure 1b. In figure 1c and 1d, there are two different cross-sectional views of the present thermostat assembly in fully closed position.

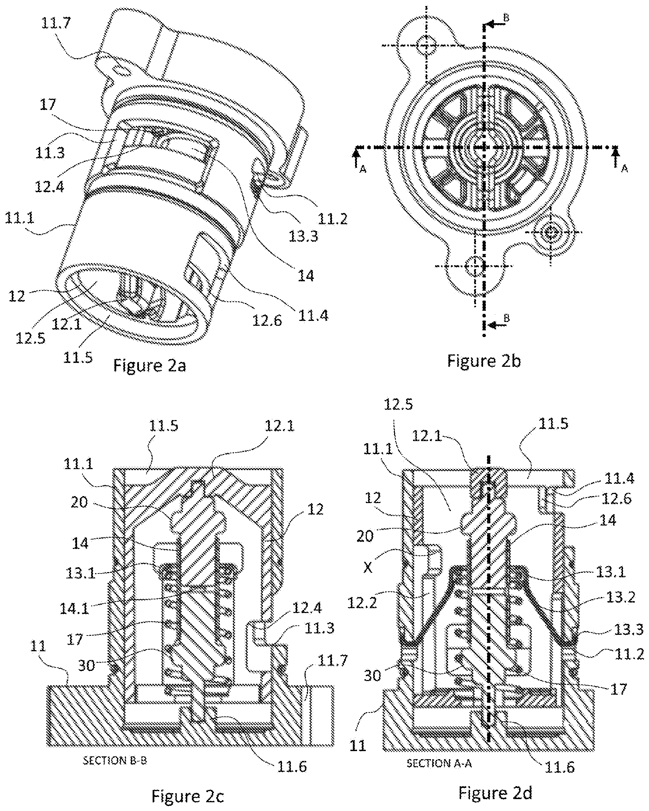

In figure 2, a partially open position of the present thermostat assembly is given. At this thermostat position, both radiator inlet and bypass inlet are partially open. Thus, there are both bypass circuit coolant flow from bypass inlet to outlet and the heat exchange coolant flow from radiator inlet to outlet. A perspective view of the present thermostat assembly in partially open position is given in figure 2a. A top sectional view of the present thermostat assembly in partially open position is given in figure 2b. In figure 2c and 2d, there are two different cross-sectional views of the present thermostat assembly in partially open position.

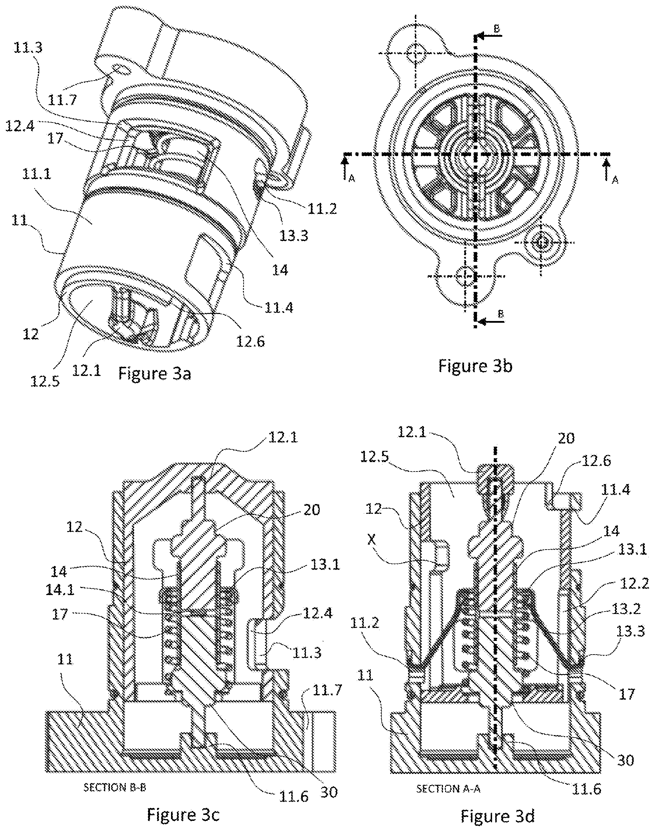

In figure 3, a fully open position of the present thermostat assembly is given. At this thermostat position, primary and secondary thermo-actuators are both open. This causes the bypass inlet to close and radiator inlet to open. Since the bypass inlet is close, there is just a heat exchange circuit coolant flow from radiator inlet to outlet. A perspective view of the present thermostat assembly in fully open position is given in figure 3a. A top sectional view of the present thermostat assembly in fully open position is given in figure 3b. In figure 3c and 3d, there are two different cross-sectional views of the present thermostat assembly in fully open position.

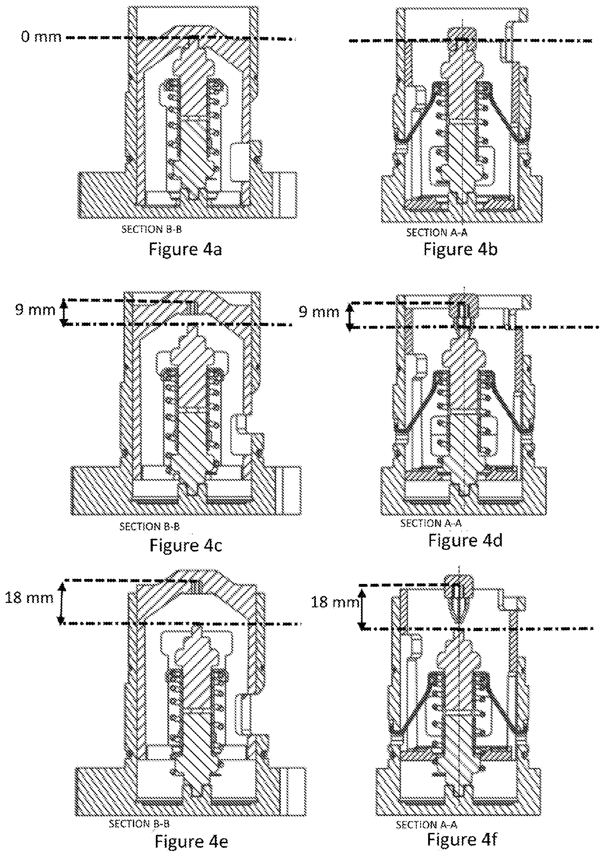

Figure 4a and 4b shows cross-sectional views of the present invention from two different perspectives when both the primary thermo-actuator and the secondary thermo-actuator are close.

Figure 4c and 4d are the cross-sectional views in the same perspectives with figure 4a and 4b, respectively. They are the cross-sectional views of the present thermostat assembly when just the secondary thermo-actuator is open. The opening of the secondary thermo-actuator causes a stroke. For a sample application of the present thermostat assembly, the stroke value is 9 mm when just one thermo-actuator is open.

Figure 4e and 4f are the cross-sectional views in the same perspectives with figure 4a and 4b, respectively. They are the cross-sectional views of the present thermostat assembly when both the primary thermo-actuator and the secondary thermo-actuator are open. The opening of both thermo-actuators causes a double stroke. So, for the same sample application, the total stroke value is 18 mm when the both thermo-actuators are open.

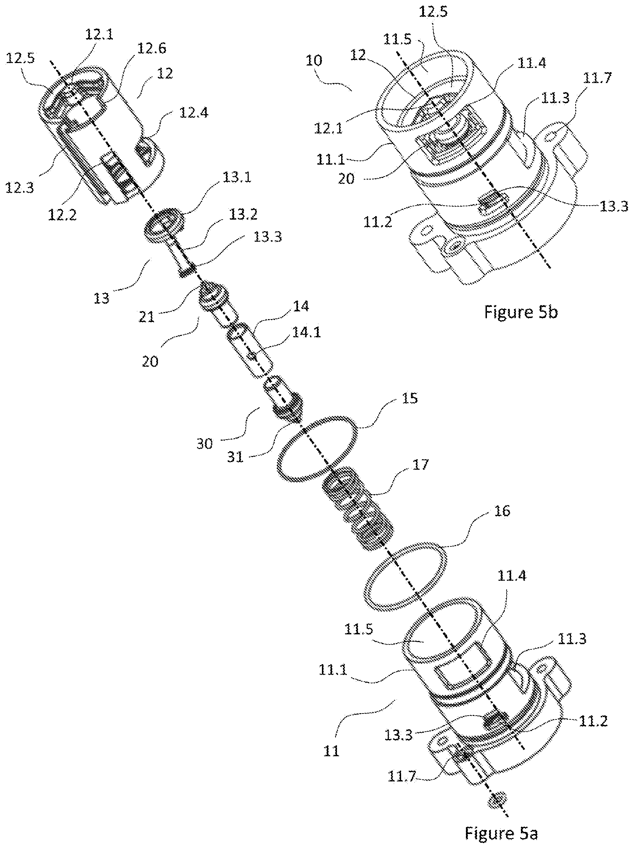

Figure 5a shows an exploded perspective view of the present thermostat assembly. In the same perspective with the exploded view, a view of fully closed thermostat assembly of the present invention is given in figure 5b.

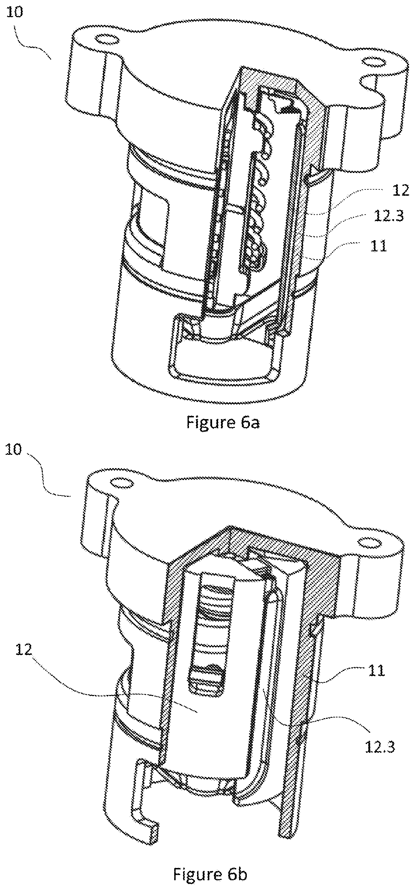

Figure 6a and figure 6b show a close view of the sensing flow channel formed on the valve structure as vertically extending through the contact surface between the valve and the frame.

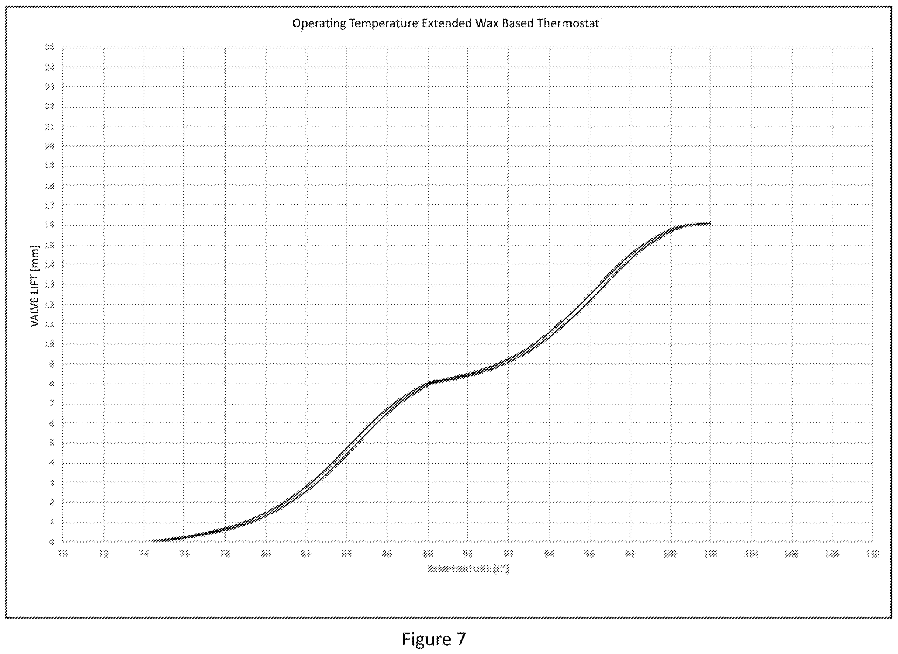

The graph in figure 7 shows the operating temperature range and related stoke amount of the present thermostat assembly having tandem thermo-actuators which are not identical and having different start to open and fully opened temperatures.

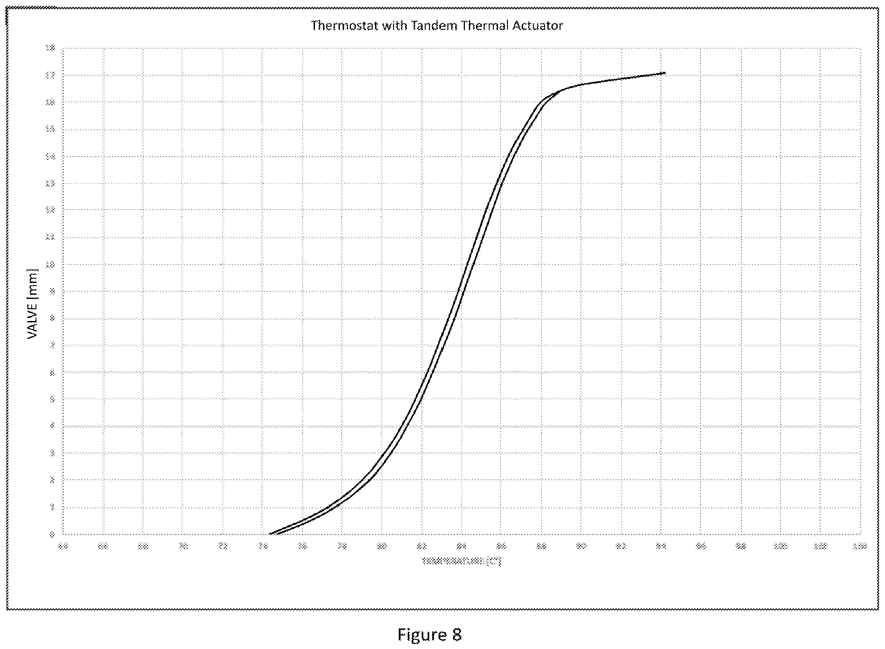

The graph in figure 8 shows the operating temperature range and related stoke amount of a thermostat assembly having tandem thermo-actuators which are identical.

### Reference Numerals

- 10.: Thermostat assembly
- 11.: Frame
- 11.1.: Valve guider
- 11.2.: Claw nest
- 11.3.: Frame-radiator inlet
- 11.4.: Frame-by-pass inlet
- 11.5.: Frame-outlet
- 11.6.: Secondary piston seat
- 11.7.: Connection joint
- 12.: Valve
- 12.1.: Primary piston seat
- 12.2.: Claw rail
- 12.3.: Sensing flow channel
- 12.4.: Valve-radiator inlet
- 12.5.: Valve-outlet
- 12.6.: Valve-by-pass inlet
- 13.: Fixture
- 13.1.: Fixture head
- 13.2.: Fixture arm
- 13.3.: Fixture claw
- 14.: Tube
- 14.1.: Air discharge hole
- 15.: Inner sealing element
- 16.: Outer sealing element
- 17.: Spring
- 20.: Primary thermo-actuator
- 21.: Primary piston
- 30.: Secondary thermo-actuator
- 31.: Secondary piston
- X.: Mounting opening

### Detailed Description of the Invention

This invention relates to an improvement in the self-controlled wax-based three-way thermostat assemblies (10) to supply extended or stepped temperature control in the engine cooling system.

Engines continue to work efficiently during the engine working conditions are supplied. Most important engine working condition is to maintain the temperature of engine and engine parts in a specific temperature range. So, removing of excess heat accumulated on crankcase and crankcase head in the engine block is crucial for the engine efficiency. The main purpose of the engine cooling system is to provide a proper cooling of engine block.

The thermostat assemblies (10) in art, which comprise just single wax-based thermo-actuator, are not sufficient to provide the proper cooling for engines due to its restricted actuation temperature range. With the map-controlled engine cooling system, the problems arised from the restriction are prevented by controlling the engine cooling system according to measured temperature or the estimated temperature in the ever-changing engine conditions during a cruising. Despite of the advantages provided by the map-controlled engine cooling system, the map-controlled engine cooling systems cost much more than the conventional self-controlled thermostat assemblies comprising single wax-based thermo-actuator in art.

The invention relates to a self-actuated three-way thermostat assembly (10) comprising two wax-based thermo-actuators which have different actuation temperature ranges. So, it is possible to obtain an extended temperature control in the engine cooling system without the high amount of cost thanks to the solution provided by the present invention, instead of the expensive solution provided by the map-controlled engine cooling system.

The present three-way thermostat assembly (10) comprises a valve (12) structure whose position specifies the coolant flow direction in the engine cooling system, a frame (11) structure guiding the mentioned valve (12) structure, an outer sealing element (16) preventing coolant leakages from the inner space of the mentioned frame to outside, a spring (17) storing the kinetic energy of the stroke as potential energy when it is compressed as a result of the total stroke of two thermo-actuators, an inner sealing element (15) preventing coolant leakages between the bypass inlet and the radiator inlet, a primary thermo-actuator (20) as one of mentioned two thermo-actuators, an secondary thermo-actuator (30) as other one of said two thermo-actuators, a tube (14) guiding these thermo-actuators together by wrapping them, a fixture (13) fixed to said frame (11) for preventing forward motion of the mentioned spring (17) while said valve (12) structure moves forward as a result of the total stroke coming from both actuators.

In the present invention, the mentioned extended temperature control in the engine cooling system is provided by using two thermo-actuators which have different actuation temperatures than each other. It could be better to explain the invention through the figures from 1 to 8 for a better understanding.

In the figure 1a, a perspective view of the present thermostat assembly (10) in fully closed position is given. As seen in the figure, the thermostat assembly (10), which is three-way comprises a bypass inlet, a radiator inlet and an outlet. In the fully closed thermostat position, the by-pass inlet is fully open while the radiator inlet is close, thus there is just coolant flow from by-pass inlet to outlet. Since the temperature of the coolant is not sufficient to activate neither the primary thermo-actuator (20) nor the secondary thermo-actuator (30), the total stroke applied to the valve (12) structure from both the primary piston (21) and the secondary piston (31) together is zero. At this fully closed thermostat position where the valve (12) stands at its minimum level, there is not any coincidence between the frame-radiator inlet (11.3) on the frame (10) structure and the valve-radiator inlet (12.4) on the valve (12) structure while the frame-by-pass inlet (11.4) on the frame (11) structure and the valve-by-pass inlet (12.6) on the valve (12) structure overlap each other. The mentioned coolant flow from the by-pass inlet to outlet is provided thanks to the overlap between the frame-by-pass inlet (11.4) and the valve-by-pass inlet (12.6).

Besides, the frame-outlet (11.5) on the frame (11) structure and the valve-outlet (12.5) on the valve (12) structure which are always in nested structure, correspond the mentioned outlet of the present thermostat assembly (10). A top sectional view of the present thermostat assembly (10) in fully closed position is given in figure 1b. Also, in figure 1c and 1d, there are cross-sectional views of the present thermostat assembly (10) in fully closed position. The cross-sectional view in figure 1c is taken according to the section B shown in figure 1b while the cross-sectional view in figure 1d is taken according to the section A shown in figure 1b. Connection joint (11.7) and mounting opening (X) shown in figure 1c and 1d respectively, which allow easier mounting of the thermostat assembly (10), are not related to the innovation in the present invention.

In the figure 2a, a perspective view of the present thermostat assembly (10) in partially open position is shown. In the partially open thermostat position, both radiator inlet and by-pass inlet are in the partially open position thus, there are coolant flows from both the radiator inlet and the by-pass inlet to outlet. The partially open position of the thermostat assembly (10) corresponds to the temperature condition which lets just the secondary thermo-actuator (30) to activate. Since these two actuators used in this thermostat assembly (10) have different actuation temperature values, their stroke values at the same temperature value are also different. For example, in one embodiment of the present thermostat assembly (10), it could be that the primary thermo-actuator (20) having greater actuation temperature values than the one of the secondary thermo-actuator (30) is closed while the secondary thermo-actuator (30) is fully open. The difference between the actuation temperatures of these thermo-actuators allows the coolant temperature control to be accomplished in a wider temperature range and so an extended temperature control in engine cooling system than the thermostat assemblies having just single thermo-actuator.

As seen in figure 2a, in the coolant temperature value allowing just the secondary thermo-actuator (30) to open, the stroke applied from the secondary piston (31) to the valve (12) structure causes the valve to move forward. A top sectional view of the present thermostat assembly (10) when just the secondary thermo-actuator (30) is open is given in figure 2b. Also, in figure 2c and 2d, there are cross-sectional views of the present thermostat assembly (10) in the position when just the secondary thermo-actuator (30) is open. The cross-sectional view in figure 2c is taken according to the section B shown in figure 2b while the cross-sectional view in figure 2d is taken according to the section A shown in figure 2b. The forward motion of the valve (12) is provided thanks to the restricted forward motion of secondary piston (31) end due to secondary piston seat (11.6) on the inner surface of frame (11). Since these two thermo-actuators are inserted as back to back into a tube (14) by a shrink fit manner, the tube (14) guides them to move always together. The air discharge hole (14.1) formed on the tube (14) allows the air discharge during this insertion. As seen in figures 2c and 2d, a spring (17) is passed through along the outside of this tube (14) before mounting these thermo-actuators into this tube (14) with shrink fit manner. Besides, a fixture (13) holding the top part of the spring (17) is fixed to the frame (11) structure at claw nest (11.2) points on the frame (11) with fixture claws (13.3) as seen in figure 2d. The usage aim of mentioned spring (17) and fixture (13) holding this spring (17) from its top portion together is to store the total kinetic energy coming from the stroke of each thermo-actuator as potential energy inside said spring (17) structure. Thus, while the stroke of secondary thermo-actuator (30) firstly affected by the increasing coolant flow temperature causes the valve (12) structure to move forward, the spring (17) structure stores the movement as potential energy which always forces the valve (12) structure to move back. Despite of the fixed position of the fixture (13) structure within the frame (11), the forward and backward motion of the valve (12) structure within frame (11) is possible with the claw rails (12.2) formed on the valve (12) structure. The claw rails (12.2) permit the forward and backward movement of the valve (12) by acting as passages for the fixture claws (13.3) during this axial motion of the valve (12). In the process passing from fully closed thermostat position to the fully open position of the secondary thermo-actuator (30) (partially open thermostat position), while the frame-by-pass inlet (11.4) on the frame (11) structure stands its same place, the valve-bypass inlet (12.6) on the valve (12) structure moves forward with the forward motion of valve (12). So, the forward motion of the valve-by-pass inlet (12.6) causes the by-pass inlet of the present thermostat assembly (10) to change position from its fully open position to the partially open position. In the same manner, In the process passing from fully closed thermostat position to the fully open position of the secondary thermo-actuator (30), while the frame-radiator inlet (11.3) on the frame (11) structure stands its same place, the valve-radiator inlet (12.4) on the valve (12) structure moves forward with the forward motion of the valve (12). So, the forward motion of the valve-radiator inlet (12.4) causes the radiator inlet of the present thermostat assembly (10) to change position from its fully closed position to the partially open position. Shortly, at the fully opened position of the secondary thermo-actuator (30), both radiator inlet and the by-pass inlet of the thermostat assembly (10) become the partially open position consequently the thermostat assembly (10) too. At the partially open position of the thermostat assembly (10), there are both coolant flow from radiator inlet to outlet and by-pass inlet to outlet.

As seen in figure 3a, a perspective view of fully open position of the present thermostat assembly (10) is given. At the temperature where the thermostat assembly (10) is fully open, both secondary thermo-actuator (30) and the primary thermo-actuator (20) are actuated and in fully open position. Figure 3b shows a top sectional view of the present thermostat assembly (10) in fully opened position. Also, in figure 3c and 3d, there are cross-sectional views of the present thermostat assembly (10) at this position. The cross-sectional view in figure 3c is taken according to the section B shown in figure 3b while the cross-sectional view in figure 3d is taken according to the section A shown in figure 3b. At the higher temperature values where the primary thermo-actuator (20) is also fully open as well as the secondary thermo-actuator (30), the total stroke coming from the both thermo-actuators causes the valve (12) structure to move further than its position where just the secondary thermo-actuator (30) is fully open. The restricted forward motion of both the primary piston (21) end and secondary piston (31) end due to respectively the primary piston seat (12.1) and secondary piston seat (11.6) provides the forward motion of the connected bodies of the thermo-actuators, consequently the valve (12) structure too. In the process passing from partially open thermostat position (just secondary thermo-actuator (30) is fully open) to the fully open position of both thermo-actuators (fully open thermostat position), while the frame-by-pass inlet (11.4) on the frame (11) structure stands its same place, the valve-bypass inlet (12.6) on the valve (12) structure moves further than its position when just the secondary thermo-actuator (30) is fully open. So, the further motion of the valve-by-pass inlet (12.6) causes the by-pass inlet of the present thermostat assembly (10) change position from its partially open position to fully closed position. In the same manner, in the process passing from partially open thermostat position to the fully open position of both thermo-actuators, while the frame-radiator inlet (11.3) on the frame (11) structure stands its same place, the valve-radiator inlet (12.4) on the valve (12) structure moves further with the further motion of the valve (12) structure. So, the further motion of the valve-radiator inlet (12.4) causes the radiator inlet of the present thermostat assembly (10) to change position from its partially open position to fully open position. Briefly, at the fully opened position of both thermo-actuators, the radiator inlet of the present thermostat assembly (10) becomes the fully open position while its by-pass inlet becomes the fully closed position consequently the thermostat assembly (10) becomes its fully open position. At the fully open position of the thermostat assembly (10), there is just coolant flow from radiator inlet to outlet.

The position of the valve (12) structure in the fully closed position of the present thermostat assembly (10) is shown in figures 4a and 4b. As seen these figures, here, there is not any strokes coming from these different temperature-actuated thermo-actuators yet. Consequently, the valve (12) structure did not move forward at this position of the present thermostat assembly (10).

The forward motion amount of the valve (12) structure in the partially open position of the present thermostat assembly (10) is shown in figures 4c and 4d. As seen these figures, there is the stroke coming from just the secondary thermo-actuator (30). Consequently, the valve (12) structure moved forward according to the stroke amount coming from the secondary thermo-actuator (30). For a sample embodiment of the present thermostat assembly (10), the forward motion amount of the valve (12) structure is 9 mm when just the secondary thermo-actuator (30) is open.

The further motion amount of the valve (12) structure in the fully open position of the present thermostat assembly (10) is shown in figures 4e and 4f. As seen these figures, there is the total stroke coming from both the primary thermo-actuator (20) and the secondary thermo-actuator (30). Consequently, the valve (12) structure moved further according to the total stroke amount coming from both these thermo-actuators. For the same sample embodiment of the present thermostat assembly (10), the further motion amount of the valve (12) structure is 18 mm when both the primary thermo-actuator (20) and the secondary thermo-actuator (30) are open.

In figure 5b, a perspective view of the present thermostat assembly (10) in the fully closed position is given. The figure 5a shows an exploded view of the present thermostat assembly (10) in the same perspective of the figure 5b. The channel structure seen on the valve (12) is a sensing flow channel (12.3) which allows both thermostatic elements to sense engine coolant temperature. Engine coolant flows through along the mentioned sensing flow channel (12.3) from bottom of thermostat assembly (10) to the top of thermostat and falls off through the region where the thermostatic elements are located. Here, the sensing flow channel (12.3) structure provides a sensing flow for the thermostatic elements. So, it is possible that both the primary thermo-actuator (20) and the secondary thermo-actuator (30) sense the real engine coolant temperature. A close view of the sensing flow channel (12.3) is given in figure 6a and 6b.

The graph in figure 7 shows the operating temperature range and related stoke amount of the present thermostat assembly (10) for a sample embodiment having tandem thermo-actuators which are not identical and having different start to open and fully opened temperatures. The graph in figure 8 shows the operating temperature range and related stroke amount for a sample thermostat embodiment having tandem thermo-actuators which are identical. (10).

## Claims

1. Self-controlled three-way thermostat assembly (10) which, comprising a primary thermo-actuator (20), a secondary thermo-actuator (30), a valve (12) structure which's position specifies the coolant flow direction, a frame (11) structure guiding the mentioned valve (12) structure, an outer sealing element (16) preventing coolant leakages from the inner space of the mentioned frame to outside, a spring (17) storing the kinetic energy of the stroke as potential energy when it is compressed as a result of the total stroke of mentioned two thermo-actuators, an inner sealing element (15) preventing coolant leakages, and is **characterized by**
comprising a tube (14) wrapping said thermo-actuators, in which mentioned primary thermo-actuator (20) and secondary thermo-actuator (30) are inserted as back to back each other,
that said thermo-actuators have different actuation-temperature values from each other for starting to open and for being fully open.

2. A three-way thermostat assembly (10) according to claim 1, wherein the forward motion amount of the valve (12) structure changes according to the total stokes coming from both the primary thermo-actuator (20) and the secondary thermo-actuator (30).

3. A three-way thermostat assembly (10) according to claim 1 and **characterized by** comprising an air discharge hole (14.1) which is formed on said tube (14) to allow the air discharge during this insertion of the thermo-actuators into the tube (14).

4. A three-way thermostat assembly (10) according to claim 1, and characterized that;
to allow the spring (17) to store the kinetic energy of the total stoke as potential energy; the mentioned fixture (13) is fixed to the frame (11) with its fixture claws (13.3) at the claw nest (11.2) points on the frame (11) structure and,
to prevent forward motion of said spring (17) while said valve (12) structure moves forward as a result of the total stroke coming from both actuators; the top portion of the mentioned spring (17) is held by its fixture head (13.1).

5. A three-way thermostat assembly (10) according to one of the preceding claims and **characterized by** comprising claw rail (12.2) structure which, being formed on the valve (12) structure, allows the valve (12) axial motion through the inner space of the thermostat assembly (10) and allows the valve to pass through both the fixture claws (13.3) and the fixture arms (13.2) which are fixed to the frame (11) when the valve (12) moves axially.

6. A three-way thermostat assembly (10) according to claim 1, **characterized by** comprising a sensing flow channel (12.3) formed on the valve (12) structure as vertically extending through the contact surface between the valve (12) and the frame (11) which togetherly create a connection passage through which engine coolant flows from bottom of thermostat assembly (10) to the top of thermostat and falls off the region where the thermostatic elements are located, thus which lets the thermo-actuators to sense actual engine coolant temperature.

## Patentansprüche

1. Selbstgesteuerte Dreiwege-Thermostatbaugruppe (10), die einen primären Thermo-Stellantrieb (20), einen sekundären Thermo-Stellantrieb (30), eine eine Struktur des Ventils (12), deren Position die Strömungsrichtung des Kühlmittels vorgibt, eine Struktur des Rahmens (11), die die genannte Struktur des Ventils (12) führt, ein äußeres Dichtungselement (16), das das Austreten von Kühlmittel aus dem Innenraum des genannten Rahmens nach außen verhindert, eine Feder (17), die die kinetische Energie des Hubs als potentielle Energie speichert, wenn sie infolge des Gesamthubs der beiden genannten Thermo-Stellantriebe zusammengedrückt wird, ein inneres Dichtungselement (15), das das Austreten von Kühlmittel verhindert, umfasst, **dadurch gekennzeichnet, dass**
sie ein Rohr (14) umfasst, das die Thermo-Stellantriebe umhüllt, in denen der primäre Thermo-Stellantrieb (20) und der sekundäre Thermo-Stellantrieb (30) hintereinander eingesetzt werden, und
dass die Thermo-Stellantriebe voneinander verschiedene Betätigungs-Temperaturwerte für den Beginn des Öffnens und für das vollständige Öffnen aufweisen.

2. Dreiwege-Thermostatbaugruppe (10) nach Anspruch 1, wobei sich der Vorwärtsbewegungsbetrag der Struktur des Ventils (12) in Abhängigkeit von den Gesamthüben ändert, die sowohl vom primären Thermo-Stellantrieb (20) als auch vom sekundären Thermo-Stellantrieb (30) kommen.

3. Dreiwege-Thermostatanordnung (10) nach Anspruch 1, **dadurch gekennzeichnet, dass** sie eine Luftauslassöffnung (14.1) umfasst, die an dem Rohr (14) ausgebildet ist, um den Luftauslass während des Einsetzens der Thermo-Stellantriebe in das Rohr (14) zu ermöglichen.

4. Dreiwege-Thermostatanordnung (10) nach Anspruch 1, **dadurch gekennzeichnet, dass**
die Befestigung (13) mit ihren Befestigungskrallen (13.3) an den Krallennestpunkten (11.2) der Struktur des Rahmens (11) am Rahmen (11) befestigt ist, um sie der Feder (17) zu ermöglichen, die kinetische Energie des Gesamthubs als potentielle Energie zu speichern, und
der obere Teil der Feder (17) von ihrem Befestigungskopf (13.1) gehalten wird, um eine Vorwärtsbewegung der Feder (17) zu verhindern, während sich die Struktur des Ventils (12) als Ergebnis des Gesamthubes, der von beiden Stellantrieben kommt, vorwärtsbewegt.

5. Dreiwege-Thermostatbaugruppe (10) nach einem der vorhergehenden Ansprüche, **dadurch gekennzeichnet, dass** sie eine Struktur der Krallenschiene (12.2) umfasst, die an der Struktur des Ventils (12) ausgebildet ist und eine axiale Bewegung des Ventils (12) durch den Innenraum der Thermostatbaugruppe (10) ermöglicht und sie dem Ventil erlaubt, sowohl die Befestigungskrallen (13.3) als auch die Befestigungsarme (13.2) zu passieren, die an dem Rahmen (11) befestigt sind, wenn sich das Ventil (12) axial bewegt.

6. Dreiwege-Thermostatbaugruppe (10) nach Anspruch 1, **dadurch gekennzeichnet, dass** sie einen Fühlerströmungskanal (12.3) umfasst, der an der Struktur des Ventils (12) so ausgebildet ist, dass er sich vertikal durch die Kontaktfläche zwischen dem Ventil (12) und dem Rahmen (11) erstreckt, die zusammen einen Verbindungsdurchgang bilden, durch den das Motorkühlmittel von der Unterseite der Thermostatbaugruppe (10) zur Oberseite des Thermostats strömt und von dem Bereich abfällt, in dem sich die thermostatischen Elemente befinden, so dass die Thermo-Stellantriebe die tatsächliche Motorkühlmitteltemperatur erfassen können.

## Revendications

1. Ensemble thermostatique à trois voies (10) autocontrôlé qui comprend un thermo-actionneur primaire (20), un thermo-actionneur secondaire (30), une structure de vanne (12) dont la position spécifie le sens d'écoulement du liquide de refroidissement, une structure de châssis (11) guidant la structure de vanne (12) mentionnée, un élément d'étanchéité extérieur (16) empêchant les fuites de liquide de refroidissement de l'espace intérieur du châssis mentionné vers l'extérieur, un ressort (17) stockant l'énergie cinétique de la course en tant qu'énergie potentielle lorsqu'il est comprimé à la suite de la course totale des deux thermo-actionneurs mentionnés, un élément d'étanchéité interne (15) empêchant les fuites de liquide de refroidissement, **caractérisé en ce que**
il comprend un tuyau (14) enveloppant lesdits thermo-actionneurs, dans lequel le thermo-actionneur primaire (20) et le thermo-actionneur secondaire (30) mentionnés sont insérés l'un derrière l'autre, et
**en ce que** lesdits thermo-actionneurs ont des valeurs de température d'actionnement différentes les unes des autres pour commencer à s'ouvrir et pour être complètement ouverts.

2. Ensemble thermostatique à trois voies (10) selon la revendication 1, dans lequel la quantité de mouvement vers l'avant de la structure de vanne (12) change en fonction des courses totales provenant à la fois du thermo-actionneur primaire (20) et du thermo-actionneur secondaire (30).

3. Ensemble thermostatique à trois voies (10) selon la revendication 1, **caractérisé en ce qu'**il comprend un trou d'évacuation d'air (14.1) qui est formé sur ledit tuyau (14) pour permettre l'évacuation d'air lors de cette insertion des thermo-actionneurs dans le tuyau (14).

4. Ensemble thermostatique à trois voies (10) selon la revendication 1, **caractérisé en ce que**;
afin de permettre au ressort (17) de stocker l'énergie cinétique de la charge totale en énergie potentielle; la fixation (13) mentionnée est fixée au châssis (11) avec ses griffes de fixation (13.3) au niveau des points de nid de griffe (11.2) sur la structure du châssis (11), et
afin d'empêcher le mouvement vers l'avant dudit ressort (17) tandis que ladite structure de vanne (12) se déplace vers l'avant à la suite de la course totale provenant des deux actionneurs; la partie supérieure du ressort (17) mentionné est maintenue par sa tête de fixation (13.1).

5. Ensemble thermostatique à trois voies (10) selon l'une des revendications précédentes, **caractérisé en ce qu'**il comprend une structure de rail à griffes (12.2) qui est formée sur la structure de vanne (12) et permet à la vanne (12) un mouvement axial à travers l'intérieur l'espace de l'ensemble thermostatique (10) et permet à la vanne de passer à travers à la fois les griffes de fixation (13.3) et les bras de fixation (13.2) qui sont fixés au châssis (11) lorsque la vanne (12) se déplace axialement.

6. Ensemble thermostatique à trois voies (10) selon la revendication 1, **caractérisé en ce qu'** il comprend un canal d'écoulement de détection (12.3) formé sur la structure de vanne (12) comme s'étendant verticalement à travers la surface de contact entre la vanne (12) et le cadre (11) qui créent ensemble un passage de connexion à travers lequel le liquide de refroidissement du moteur s'écoule du bas de l'ensemble thermostatique (10) vers le haut du thermostat et tombe de la région où se trouvent les éléments thermostatiques, permettant ainsi aux thermo-actionneurs de détecter la température réelle du liquide de refroidissement du moteur.
